# EUROPÄISCHE PATENTSCHRIFT

(11) **EP 2 131 048 B1**
(45) Veröffentlichungstag und Bekanntmachung des Hinweises auf die Patenterteilung: **25.04.2012**
(21) Anmeldenummer: 09007513.6
(22) Anmeldetag: 06.06.2009
(51) Int. Cl.: F16B 39/30, F16B 33/02

(54) **Verbindungselement für eine Schraubverbindung sowie eine solche Schraubverbindung**
Locking element for a screw connection and such a screw connection
Elément de verrouillage pour un raccordement de vis et raccordement de vis correspondant

(30) Priorität: 06.06.2008 DE 102008027297
(43) Veröffentlichungstag der Anmeldung: 09.12.2009
(73) Patentinhaber: PEE-WEE Kaltwalz- und Rohrbearbeitungsmaschinen GmbH, 65582 Diez (DE)
(72) Erfinder: Jung, Alexander Steffen, 65582 Diez-Hambach (DE); Gascov, Igor, 65549 Limburg (DE)
(74) Vertreter: Müller, Eckhard

(56) Entgegenhaltungen:
- DE-A1-102005 041 586
- US-A- 3 687 183
- US-E- R E27 678

## Beschreibung

Die Erfindung betrifft ein Verbindungselement mit Gewinde, welches mit einem Gegengewinde, beispielsweise einer Mutter, in Eingriff bringbar ist, und mit Mitteln zum Erzeugen einer auf das Gegengewinde wirkenden Klemmkraft. Die Erfindung betrifft ferner eine Schraubverbindung mit einem solchen Verbindungselement.

### Stand der Technik

Ein derartiges Verbindungselement ist in Art einer Schraube aus der DE 40 39 402 A1 bereits bekannt. Das Gewinde der Schraube ist als sogenanntes selbstsicherndes Gewinde beschrieben. Durch das selbstsichernde Gewinde ist ein ungewolltes Selbstlösen der Schraube aus einem mit diesem verschraubten Bauteil vermieden. Ein solches Selbstlösen entsteht, wenn Gewinde und Gegengewinde mit Spiel ineinandergreifen. Vibrationen oder dergleichen Erschütterungen bewirken dann eine Relativbewegung zwischen der Schraube und dem das Gegengewinde aufweisenden Bauteil. Um eine solche Relativbewegung zu verhindern, ist es bei der bekannten Schraube vorgesehen, dass das Gewinde über wenigstens einen Windungsabschnitts gegenüber dem restlichen Gewinde einen Versatz in axialer Richtung der Schraube aufweist. Hierdurch greifen Gewinde und Gegengewinde zumindest in dem versetzten Windungsabschnitt spielfrei ineinander.

Die bekannte Schraube mit selbstsicherndem Gewinde wird im Walzverfahren mittels Walzbacken hergestellt. Um den axial versetzten Abschnitt des Gewindes herstellen zu können, weist die Walzbacke einen Einsatz auf. Der Einsatz ist in der Walzbacke verschiebbar aufgenommen. Durch entsprechendes Verschieben des Einsatzes in der Walzbacke ist es möglich, beim Formen der Schraube den axialen Versatz des Windungsabschnittes zu erzeugen. Zur Herstellung der bekannten Schraube ist somit neben der Walzbacke zusätzlich auch der Einsatz notwendig. Darüber hinaus ist es erforderlich, dass in der Walzbacke maßgenau eine Aufnahme für den Einsatz herauszuarbeiten ist. Damit ist für die Herstellung der bekannten Schraube mit ihrem selbstsichernden Gewinde ein relativ aufwendiges Werkzeug notwendig.

Aus der CH 546 351 A ist eine selbstsichernde Schraube bekannt. Die Schraube weist über wenigstens einen Abschnitt eines Gewindeganges an einer Flanke des Gewindes einen nach außen stehenden Vorsprung auf, welcher als Rippe bezeichnet ist. Die Rippe tritt in Klemmkontakt mit einem Außengewinde, beispielsweise einer Mutter, und erzeugt auf diese Weise eine Klemmverbindung zwischen der Schraube und dem das Außengewinde aufweisenden Bauteil.

DE 10 2005 041 586 A1 offenbart eine gewindefurchende Schraube mit Vorsprüngen auf ihrem Gewinde. Dabei ist die Rückflanke der Schraube mit den abstehenden Vorsprüngen versehen und die Lastflanke weist eine durchgehende glatte Fläche auf. In jedem Gewindegang ist ein Vorsprung vorgesehen.

### Aufgabenstellung

Der Erfindung liegt die Aufgabe zugrunde, ein Verbindungselement mit den eingangs genannten Merkmalen bereitzustellen, welches einfach, insbesondere mit einfachem Werkzeug, herstellbar ist.

### Erfindung und vorteilhafte Wirkungen

Zur Lösung der Aufgabe wird ein Verbindungselement vorgeschlagen, welches die in Anspruch 1 genannten Merkmale aufweist.

Das Verbindungselement hat ein Gewinde, welches mit einem Gegengewinde, beispielsweise einer Mutter, in Eingriff bringbar ist. Es weist ferner Mittel zum Erzeugen einer auf das Gegengewinde wirkenden Klemmkraft auf. Das Verbindungselement zeichnet sich unter anderem dadurch aus, dass die Klemmmittel durch die Flanken wenigstens eines Abschnittes des Gewindes gebildet sind, deren Anordnung zueinander gegenüber der Anordnung der Flanken des Gewindes außerhalb des Abschnittes bzw. Klemmabschnittes derart geändert ist, dass bei Eingriff des Gewindes in das Gegengewinde die Klemmkraft an wenigstens einer der Flanken des Klemmabschnitts erzeugt wird.

Durch diese Maßnahme ist das Verbindungselement mit seinen Klemmmitteln in einfacher Weise herstellbar, da dazu lediglich die Flanken in ihrer Anordnung zueinander in dem die Klemmwirkung hervorrufenden Gewindeabschnitt verändert sind. Bei Eingriff des Gegengewindes in jenen Gewindeabschnitt des Verbindungselementes ist damit ein Kraftschluss von Gewinde und Gegengewinde erzielt, insbesondere im Bereich der einander entsprechenden Flanken von Gewinde und Gegengewinde. Das bisher bekannte aufwendige Verschieben des gesamten Gewindeprofils über einen vorgegebenen Gewindeabschnitt ist zur Realisierung der erfindungsgemäßen Maßnahme nicht notwendig. Damit ist das erfindungsgemäße Verbindungselement mit einfachsten Werkzeugen herstellbar, da sich jene Änderungen bezüglich der Flankenanordnung im Klemmabschnitt des Verbindungselementes bereits durch einfaches Einschleifen der entsprechenden Kontur in das Werkzeug problemlos realisieren lassen. Zum Herstellen des erfindungsgemäßen Verbindungselements kann daher auf einfachere Werkzeuge zurückgegriffen werden als zur Herstellung der bisher bekannten Schraubelemente mit axial versetztem Gewindeabschnitt notwendig ist.

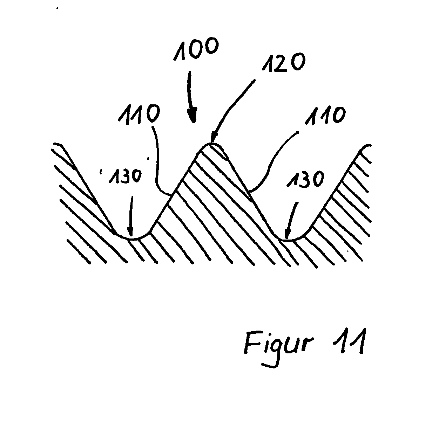

Figur 11 zeigt zum besseren Verständnis der Erfindung in schematischer Darstellung das Gewindeprofil 100 eines Gewindeganges eines mit einem Gewinde versehenen Verbindungselementes im Achsschnitt. Das Gewindeprofil 100 ist gebildet durch zwei in einem Winkel zueinander angeordnete Flanken 110, welche an der Gewindespitze 120 des Gewindeprofiles 100 zusammen laufen bzw. miteinander verbunden sind. Die Gewindespitze 120 ist dabei radial außen liegend angeordnet. Die Flanken 110 erstrecken sich radial nach innen bis hin zu dem Gewindegrund 130 des Gewindeprofiles, wobei der Gewindegrund 130 der radial innen liegende Teil des durch das Gewindeprofil 100 gebildeten und im Achsschnitt dargestellten Zahnes bildet. Im Sinne der Erfindung sind unter den Flanken des wenigstens einen Abschnittes des Gewindes vorzugsweise die in Figur 11 dargestellten Flanken 110 zu verstehen.

Nach einer Ausgestaltung der Erfindung ist es vorgesehen, dass die Flanken des wenigstens einen Klemmabschnittes derart zueinander angeordnet sind, dass im eingegriffenen Zustand von Gewinde und Gegengewinde das Verbindungselement in dem Gegengewinde verdrehsicher gehalten ist. Hierdurch kommt es alleine aufgrund der wenigstens einen Klemmkraft erzeugenden Flanke des Klemmabschnittes zu einer lösesicheren Verklemmung des Verbindungselementes gegenüber dem das Gegengewinde aufweisenden Bauteil. Es ist damit eine Selbstsicherung des Verbindungselementes gegenüber dem das Gegengewinde aufweisenden Bauteils erreicht. Diese Selbstsicherung kann in der Weise ausgelegt sein, dass bei üblichen auf das Verbindungselement und/oder das Bauteil mit dem Gegengewinde wirkenden Kräften das Verbindungselement und das Bauteil zueinander verdrehsicher gehalten sind. Die Selbstsicherung ist bevorzugt überwindbar, sofern auf das Verbindungselement und/oder das Bauteil mit dem Gegengewinde ein vorgegebenes Anzugsmoment wirkt, welches größer ist als das durch den Kraftschluss von Gewinde und Gegengewinde erzeugte Gegenmoment.

Nach einer weiteren Ausgestaltung der Erfindung ist es vorgesehen, dass eine der Flanken des wenigstens einen Klemmabschnitts in ihrer Anordnung zur anderen Flanke des Klemmabschnitts geändert ist. Hierdurch ist auf besonders einfache Weise und mit wenig Aufwand das Klemmmittel realisiert, da nur eine der Flanken in dem die Klemmung hervorrufenden Bereich geändert ist.

Es kann auch vorgesehen sein, dass beide Flanken des Klemmabschnitts in ihrer Anordnung zueinander geändert sind. Hierdurch ist ein Kraftschluss mit dem Gegengewinde über beide Flanken erzielbar, sodass eine besonders hohe Klemmwirkung zwischen Gewinde und Gegengewinde herbeigeführt ist. Darüber hinaus wird beim Eingreifen des Gewindes in das Gegengewinde etwaigen Verformungen des Gegengewindes entgegengewirkt, da die Klemmkräfte an beiden Gewindeflanken des Gegengewindes angreifen. Eine einseitige Belastung der Gewindeflanken des Gegengewindes ist somit vermieden.

Was die Ausrichtung der Flanken des wenigstens einen Klemmabschnittes zueinander anbelangt, bieten sich verschiedene Ausgestaltungen an. Mit Vorteil ist es vorgesehen, dass die Flanken des Klemmabschnitts zueinander im Wesentlichen gegenläufig angeordnet sind. Es hat sich gezeigt, dass eine derartige Flankenausrichtung herstellungstechnisch einfach realisierbar ist.

Ferner bietet es sich an, dass die Flanken des Klemmabschnittes im Wesentlichen gleich gerichtet sind. Eine solche Ausrichtung der Flanken des Klemmabschnittes ermöglicht eine flexible Anpassung des Gewindes an Gegengewinde mit großen Toleranzen, um selbst bei derartigen Kombinationen von Gewinde und Gegengewinde die erfindungsgemäße Klemmkraft erzeugen zu können.

Nach einer weiteren Ausgestaltung der Erfindung ist es vorgesehen, dass die wenigstens eine Klemmkraft erzeugende Flanke des Klemmabschnittes nach außen versetzt ist. Durch den Versatz ist eine flächige Anlage der Flanke an der korrespondierenden Flanke des Gegengewindes erzielbar, sodass hierdurch eine besonders große Klemmwirkung erreicht ist. Darüber hinaus weist das Gewinde im Klemmabschnitt aufgrund der wenigstens einen nach außen versetzten Flanke ein Profil auf, welches gegenüber dem Profil des Gewindes außerhalb des Klemmabschnitts breiter ausgebildet ist. Mit anderen Worten ist, im Querschnitt gesehen, der das Gewinde bildende Zahn durch den Versatz der wenigstens einen Flanke breiter als außerhalb des Klemmabschnittes ausgebildet, beispielsweise ist die Windung des Gewindes im Klemmabschnitt gegenüber der Windung außerhalb des Klemmabschnittes als Verdickung ausgebildet und/oder die wenigstens eine Flanke des Klemmabschnittes ist gegenüber der Flanke außerhalb des Klemmabschnittes als Vorsprung ausgebildet. Damit können auch höchste Klemmkräfte erzeugt werden, ohne dass es zu einer Beschädigung des Gewindes im Klemmabschnitt kommt.

Es bietet sich dabei an, dass zur Klemmkrafterzeugung beide Flanken des Klemmabschnittes nach außen versetzt sind. Hierdurch ist eine noch stabilere Klemmverbindung zwischen Gewinde und Gegengewinde erreichbar. Es lassen sich daher besonders große Kräfte erzeugen, ohne dass es zu Beschädigungen des Verbindungselementes kommt.

Weiterhin bietet es sich an, dass die wenigstens eine Klemmkraft erzeugende Flanke gegenüber der Flanke außerhalb des Klemmabschnittes im Wesentlichen parallel versetzt ist. Eine solche Ausgestaltung lässt sich herstellungstechnisch besonders einfach realisieren.

Nach einer Ausführungsform der Erfindung ist es vorgesehen, dass sich der Klemmabschnitt über wenigstens eine Windung des Gewindes erstreckt. Dadurch wirkt die Klemmkraft über den gesamten Umfang des Verbindungselementes auf das Gegengewinde, sodass in Klemmstellung von Gewinde und Gegengewinde das Verbindungselement gegenüber dem das Gegengewinde aufweisenden Bauteil im Wesentlichen exakt zueinander ausgerichtet vorliegt. Dies ist insbesondere bei Gewinden und Gegengewinden mit relativ großer Maßtoleranz von Vorteil, da beispielsweise bei lediglich über einen Teil eines Gewindegangs auf das Gegengewinde wirkenden Klemmmitteln es zu einer Schrägstellung des Verbindungselementes gegenüber dem das Gegengewinde aufweisenden Bauteil kommen kann.

Nach einer anderen Ausführungsform der Erfindung ist es vorgesehen, dass eine Windung des Gewindes mehrere Klemmabschnitte aufweist. Dadurch ist die Wirkfläche der einen Windung verringert, welche mit dem Gegengewinde in Wirkkontakt tritt und die Klemmung hervorruft. Es kommt zu einem verringerten Materialverschleiß in dem Gewinde des Verbindungselementes. Gleichfalls kann durch die gezielte Anbringung der Klemmabschnitte an verschiedenen Stellen einer Windung des Gewindes eine besonders belastbare Klemmverbindung von Gewinde und Gegengewinde realisiert werden, bei der gerade die Standzeit des Gewindes des Verbindungselementes besonders erhöht ist. Denn auch bei wechselnd angreifenden Kräften an dem Verbindungselement und/oder dem das Gegengewinde aufweisenden Bauteil ist eine sichere und standfeste Selbsthemmung des Gewindes gegenüber dem Gegengewinde gegeben.

Bevorzugt weist dazu eine Windung des Gewindes wenigstens zwei Klemmabschnitte, vorzugsweise vier Klemmabschnitte auf, um eine besonders standfeste Klemmverbindung zwischen Gewinde und Gegengewinde auch bei wechselnd angreifenden Kräften zu erzielen.

Bevorzugt sollten dabei die mehreren Klemmabschnitte über die Windung verteilt angeordnet sein.

Nach einer weiteren Ausführungsform der Erfindung ist es vorgesehen, dass bei mehreren Klemmabschnitten einer Windung des Gewindes eine der Flanken des jeweiligen Klemmabschnittes die Klemmkraft erzeugende Flanke bildet. Dadurch ist trotz der mehreren über eine Windung vorgesehenen Klemmabschnitte eine Klemmwirkung mit relativ geringem herstellungstechnischem Aufwand realisierbar.

Dabei bietet es sich an, dass eine der beiden Flanken der jeweiligen Klemmabschnitte abwechselnd die Klemmkraft erzeugende Flanke bildet. Indem die Klemmabschnitte einer Windung abwechselnd mit der einen und dann mit der anderen Flanke des jeweiligen Klemmabschnittes klemmkrafterzeugend wirkt, ist eine besonders gute und belastungsarme Klemmwirkung mit dem Gegengewinde erzielbar. Denn die Klemmkräfte greifen trotz der lediglich einen Klemmkraft erzeugenden Flanke pro Klemmabschnitt, über eine Windung gesehen, gleichmäßig verteilt über die Windung an dem Gegengewinde an. Dabei werden beide Gegenflanken des Gegengewindes von der Klemmkraft beaufschlagt, was bauteilschonend für das Gegengewinde ist.

Nach einer weiteren vorteilhaften Ausgestaltung der Erfindung ist es vorgesehen, dass wenigstens zwei aufeinanderfolgende Windungen des Gewindes Klemmabschnitte aufweisen. Hierdurch kann der aufzubringende Kraftaufwand zum Eindrehen des Verbindungselementes in Abhängigkeit von der Einschraubtiefe des Verbindungselementes gezielt und in flexibler Art und Weise verändert, insbesondere erhöht werden.

Dabei bietet es sich an, dass die einander zugewandten Flanken benachbarter Windungen die Klemmkraft erzeugenden Flanken der Klemmabschnitte bilden. Diese Maßnahme ermöglicht bereits ein hohes Maß an Klemmkraftentfaltung, ohne dass dazu beide Flanken der Klemmabschnitte zur Klemmkrafterzeugung ausgebildet sein müssen.

Von Vorteil für eine besonders hohe Klemmkraftwirkung über den Umfang des Gewindes ist es, dass die Klemmkraft erzeugenden Flanken benachbarter Windungen versetzt zueinander angeordnet sind.

Dabei bietet es sich an, dass die Klemmabschnitte benachbarter Windungen in gleicher Weise zueinander angeordnet sind. Hierdurch ist eine herstellungstechnisch relativ einfache Realisierung der mehreren an benachbarten Windungen vorgesehenen Klemmabschnitte möglich.

Nach einer weiteren Ausgestaltung der Erfindung ist es vorgesehen, dass zwischen den Windungen mit Klemmmitteln wenigstens eine Windung ohne Klemmmittel liegt. Dies ermöglicht ein Eindrehen des Verbindungselementes bis zu einer vorgebbaren Einschraubtiefe mit erhöhtem Kraftaufwand, welcher durch erste Klemmmittel hervorgerufen werden kann. Ein weiter erhöhter Kraftaufwand beim Einschrauben des Verbindungselements kann dann erforderlich werden, wenn beim Einschrauben die nächstfolgenden Klemmmittel aufweisenden Windungen in Eingriff mit dem Gegengewinde kommen.

Bei dem erfindungsgemäßen Verbindungselement kann das Gewinde in Art eines Spitzgewindes, Sägegewindes, Rundgewindes, Trapezgewindes oder Withworth-Gewinde ausgebildet sein. Grundsätzlich sind die erfindungsgemäß vorgesehenen Klemmmittel bei allen Arten von Gewinden realisierbar.

Besonders einfach lässt sich das Verbindungselement herstellen, wenn es ein Kaltumformteil ist, insbesondere als Rollformteil gebildet ist.

Bevorzugt ist das Verbindungselement Teil einer Schraubverbindung mit einem ein Gegengewinde aufweisenden Bauteil, insbesondere einer Mutter oder einem plattenförmigen Teil, dessen Gegengewinde mit dem Gewinde des Verbindungselementes in Eingriff gebracht ist.

### Ausführungsbeispiele

Weitere Ziele, Vorteile, Merkmale und Anwendungsmöglichkeiten der vorliegenden Erfindung ergeben sich aus der nachfolgenden Beschreibung mehrerer Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: ein mögliches Ausführungsbeispiel eines Verbindungselements für eine Schraubverbindung mit Gewinde und Klemmmitteln in Seitenansicht,
- Fig. 2: ein vergrößerten Ausschnitt des Verbindungselements gemäß Figur 1.
- Fig. 3: ein weiteres mögliches Ausführungsbeispiel eines Verbindungselements mit Gewinde und Klemmmitteln in perspektivischer Ansicht,
- Fig. 4: ein vergrößerter Ausschnitt des Details A des Verbindungselements gemäß Figur 3,
- Fig. 5: ein nochmals weiteres Ausführungsbeispiel eines Verbindungselements mit Gewinde und Klemmmitteln in perspektivischer Ansicht,
- Fig. 6: ein vergrößerter Ausschnitt des Details A des Verbindungselements gemäß Figur 5,
- Fig. 7: ein wiederum weiteres Ausführungsbeispiel eines Verbindungselements mit Gewinde und zwei in axialer Richtung vorgesehenen Bereichen zur Klemmung gegenüber einem Gegengewinde in perspektivischer Ansicht,
- Fig. 8: ein vergrößerter Ausschnitt des Details A des Verbindungselements gemäß Figur 7,
- Fig. 9: ein nochmals weiteres Ausführungsbeispiel eines Verbindungselements mit Gewinde und Klemmmitteln in perspektivischer Ansicht und
- Fig. 10: ein vergrößerter Ausschnitt des Details A des Verbindungselement gemäß der Figur 9.

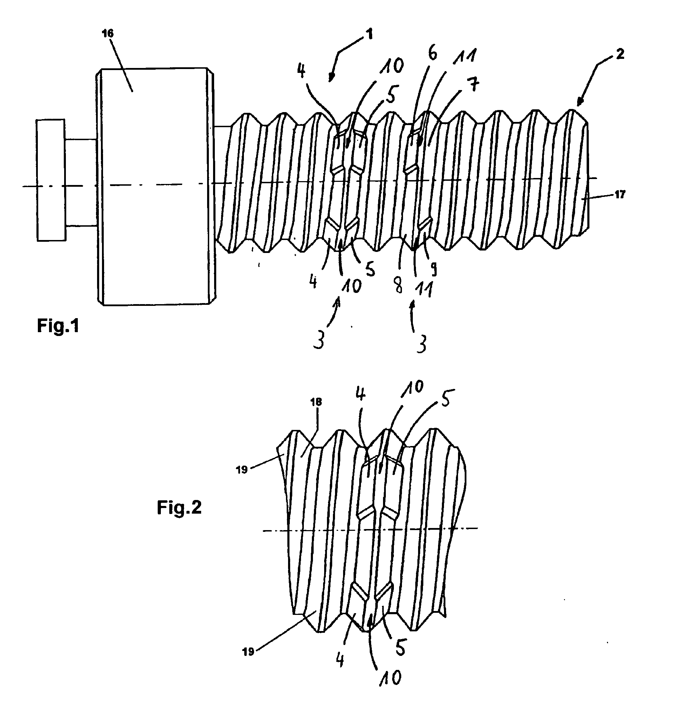

Figuren 1 und 2 zeigen - in schematischer Darstellung - eine mögliche Ausführungsform eines Verbindungselements 1 mit Gewinde 2, welches mit einem (nicht dargestellten) Gegengewinde in Eingriff bringbar ist. Das Verbindungselement 1 ist in Art einer Schraube ausgebildet, mit einem Schaft 17 und einem Kopf 16. Das Gewinde 2 des Schaftes 17 ist dabei als übliches metrisches Gewinde ausgebildet, das vollprofiliert im Schaft 17 geformt ist.

Das Verbindungselement 1 kann natürlich auch ein Gewindestab, eine Gewindespindel oder dergleichen gewindeführendes Bauteil sein. Die Erfindung ist dabei nicht auf ein Verbindungselement mit Außengewinde beschränkt. Vielmehr umfasst die Erfindung auch Innengewinde führende Verbindungselemente.

Das Verbindungselement 1 weist Mittel 3 zum Erzeugen einer auf das (nicht dargestellte) Gegengewinde wirkenden Klemmkraft auf. Bei der Ausführungsform gemäß Figur 1 sind zwei unterschiedliche Ausgestaltungen der Klemmmittel 3 realisiert, welche auch unabhängig voneinander separat an Verbindungselementen verwirklicht sein können. Die Klemmmittel 3 der beiden Ausführungen sind dabei durch die Flanken 4, 5 bzw. 6, 7 oder 8, 9 wenigstens eines Abschnitts bzw. Windungsabschnittes 10 bzw. 11 des Gewindes 2 gebildet.

Bei den Klemmmitteln 3 der beiden Ausgestaltungen gemäß Figur 1 ist die Anordnung der sich gegenüberstehenden Flanken 4, 5 bzw. 6, 7 und 8, 9 zueinander gegenüber der Anordnung der Flanken 18, 19 des Gewindes 2 außerhalb des Klemmabschnittes 10 bzw. 11 derart geändert, dass bei Eingriff des Gewindes 2 in das (nicht dargestellte) Gegengewinde die Klemmkraft an wenigstens einer der Flanken 4, 5 bzw. 6, 7 und 8, 9 des Klemmabschnitts 10, 11 erzeugt wird. Damit ist bei Eingriff des Gewindes 2 in das (nicht dargestellte) Gegengewinde aufgrund der vorliegenden Klemmkraft eine Relativbewegung des Verbindungselements 1 gegenüber dem (nicht dargestellten) Bauteil mit dem Gegengewinde verhindert und ein ungewolltes Lösen der Schraubverbindung aus Gewinde 2 und (nicht dargestelltem) Gegengewinde vermieden.

Die beiden in Figur 1 dargestellten Ausgestaltungen der Klemmmittel 3 unterscheiden sich unter anderem dadurch, dass bei der einen Ausgestaltung die beiden Flanken 4, 5 des Klemmabschnittes 10 in ihrer Anordnung zueinander geändert sind und somit beide Flanken 4, 5 des Abschnitts 10 zur Klemmkrafterzeugung an dem (nicht dargestellten) Gegengewinde ausgebildet sind. Demgegenüber ist bei der anderen Ausgestaltung lediglich die Flanke 6 bzw. 9 des Klemmabschnitts 11 in ihrer Anordnung zur anderen Flanke 7 bzw. 8 des Klemmabschnitts 11 geändert, sodass lediglich die eine Flanke 6 bzw. 9 des Klemmabschnitts 11 in diesem Fall zur Klemmkrafterzeugung an dem (nicht dargestellten) Gegengewinde ausgebildet ist.

Bevorzugt sind die klemmkrafterzeugenden Flanken 4, 5 bzw. 6, 9 der Klemmabschnitte 10, 11 jeweils nach außen versetzt angeordnet. Bevorzugt sind ferner die klemmkrafterzeugenden Flanken 4, 5 bzw. 6, 9 der Klemmabschnitte 10, 11 gegenüber den Flanken 18, 19 außerhalb des Klemmabschnittes 10, 11 im Wesentlichen nach außen parallel versetzt.

Die beiden Ausgestaltungen der Klemmmittel 3 gemäß Figur 1 haben unter anderem gemeinsam, dass eine Windung des Gewindes 2 mehrere der Klemmabschnitte 10 bzw. 11 aufweist. Bevorzugt sind die Klemmabschnitte 10 bzw. 11 über die eine Windung verteilt angeordnet. Unter einer Windung wird im Zuge der Erfindung der Verlauf des Gewindes einmal um den Schaft 17 des Verbindungselementes 16 verstanden.

Bei den beiden Ausgestaltungen der Klemmmittel 3 gemäß Figur 1 sind jeweils vier Klemmabschnitte 10 bzw. 11 über eine Windung des Gewindes 2 vorgesehen und bevorzugt gleichmäßig verteilt über die Windung angeordnet.

Bei der Ausgestaltung der Klemmmittel 3 gemäß Figur 1 mit den Klemmabschnitten 11 sind diese über die Windung des Gewindes 2 in der Weise verteilt angeordnet, dass sich Klemmabschnitte 11 mit der einen klemmkrafterzeugenden Flanke 9 und Klemmabschnitte 11 mit der anderen klemmkrafterzeugenden Flanke 6 abwechseln. Dabei liegen die Flanken 6 und die Flanken 9 der Klemmabschnitte 11 in entgegengesetzter Richtung zueinander nach außen versetzt vor. Es sind die klemmkrafterzeugenden Flanken 6, 9 der Klemmabschnitte 11 also versetzt zueinander über eine Windung verteilt angeordnet. Bei der einen Ausgestaltung der Klemmmittel 3 mit den Klemmabschnitten 11 sind somit über eine Windung vier klemmkrafterzeugende Flanken vorgesehen. Demgegenüber liegen bei den Klemmabschnitten 10 der anderen Ausgestaltung über eine Windung des Gewindes 2 acht klemmkrafterzeugende Flanken vor. Dabei liegen die jeweiligen benachbarten Klemmabschnitte 10 bzw. 11 in einem rechten Winkel zueinander.

Selbstverständlich ist die Erfindung nicht auf diese Anzahl der klemmkrafterzeugenden Flanken beschränkt. Vielmehr können auch 12, 16, 20 und mehr klemmkrafterzeugende Flanken über eine Windung des Gewindes 2 vorgesehen sein.

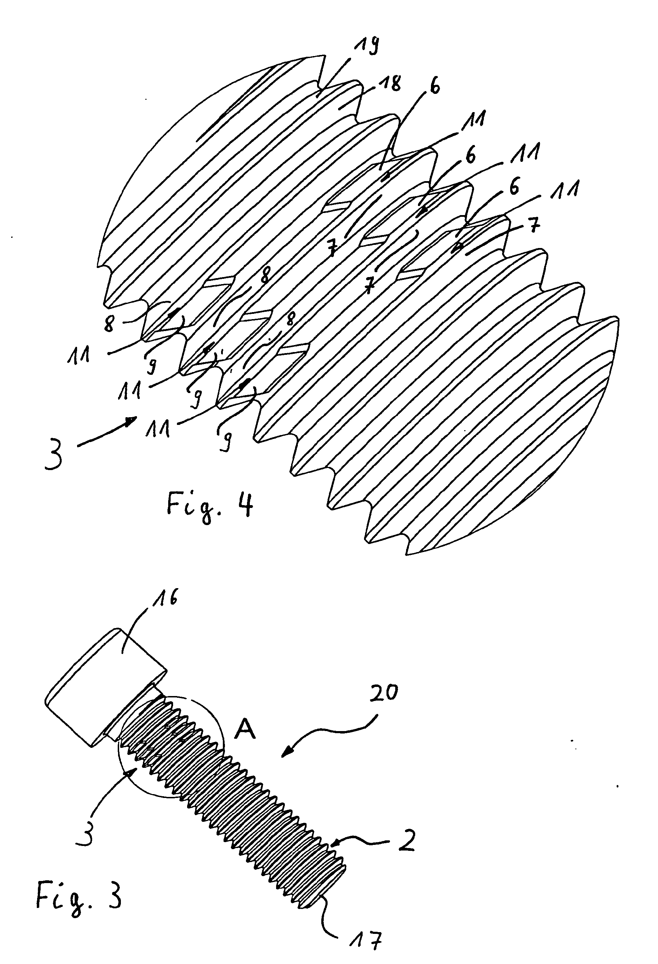

Figuren 3 und 4 zeigen - in schematischer Darstellung - eine weitere Ausführungsform eines Verbindungselements 20. Merkmale der Ausführungsform gemäß der Figuren 3 und 4, welche mit den Merkmalen des Verbindungselements 1 gemäß der Figuren 1 und 2 identisch sind, sind mit gleichen Bezugszeichen versehen; insoweit wird auf die Beschreibung zu den Figuren 1 und 2 verwiesen.

Das Verbindungselement 20 gemäß der Figuren 3 und 4 unterscheidet sich von dem Verbindungselement 1 gemäß der Figuren 1 und 2 unter anderem dadurch, dass die Klemmabschnitte 11 an drei aufeinanderfolgenden Windungen des Gewindes 2 vorgesehen sind. Dabei sind die einander zugewandten Flanken benachbarter Windungen in gleicher Weise zueinander angeordnet und bilden bevorzugt eine im Wesentlichen geradlinige Reihe in axialer Richtung des Verbindungselementes 20.

Weiterhin ist es bei dem Verbindungselement 20 der Figuren 3 und 4 vorgesehen, dass die Klemmmittel 3 in axialer Richtung gesehen, im hinteren Bereich des Gewindes 2 vorgesehen sind, welches dem Kopf 16 des Verbindungselements 20 zugewandt ist.

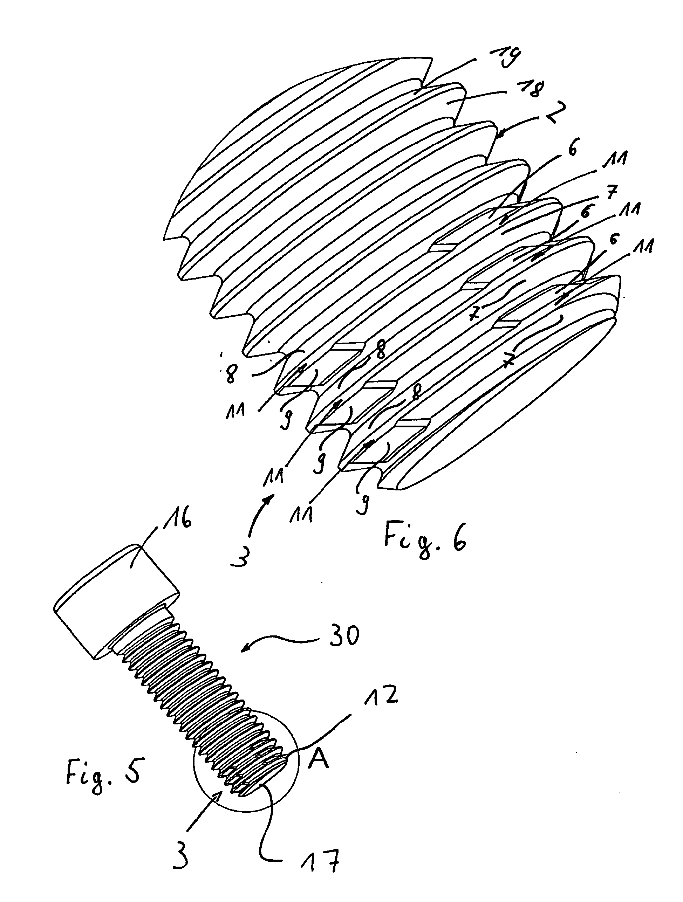

Die Figuren 5 und 6 zeigen - in schematischer Darstellung - ein wiederum weiteres Ausführungsbeispiel eines Verbindungselements 30. Merkmale des Verbindungselements 30, welche mit den Merkmalen des Verbindungselements 20 gemäß der Figuren 3 und 4 und/oder dem Verbindungselement 1 gemäß der Figuren 1 und 2 identisch sind, sind mit gleichen Bezugszeichen versehen; insoweit wird auf die Beschreibung zu den Figuren 1 und 2 sowie 3 und 4 verwiesen.

Das Verbindungselement 30 gemäß der Figuren 5 und 6 unterscheidet sich von dem Verbindungselement 20 gemäß der Figuren 3 und 4 unter anderem dadurch, dass die Klemmmittel 3 im Bereich des freien Endes 12 des Schaftes 17 des Verbindungselementes 30 angeordnet sind. Bevorzugt sind dabei die ersten drei Windungen des Gewindes 2 mit den Klemmabschnitten 11 versehen.

Die Anordnung und Ausgestaltung der Klemmabschnitte 11 mit ihren klemmkrafterzeugenden Flanken 6 bzw. 9 sind mit den Klemmabschnitten 11 des Verbindungselementes 20 gemäß der Figuren 3 und 4 identisch.

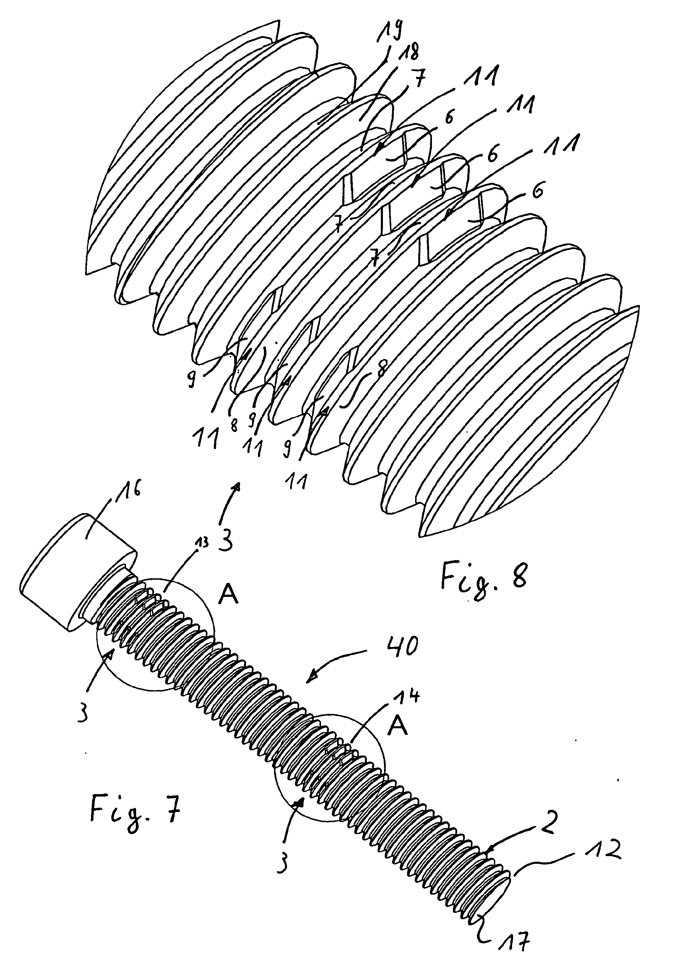

Die Figuren 7 und 8 zeigen eine weitere Ausführungsform eines Verbindungselements 40 mit den Klemmmitteln 3. Merkmale des Verbindungselements 40 und der Klemmmittel 3, welche mit den Verbindungselementen 1, 20, 30 gemäß der Figuren 1 bis 6 identisch sind, sind mit gleichen Bezugszeichen versehen; insoweit wird auf die Beschreibung zu den Figuren 1 bis 6 verwiesen.

Das Verbindungselement 40 gemäß der Figuren 7 und 8 unterscheidet sich von den Verbindungselementen 20 und 30 gemäß der Figuren 3 bis 6 unter anderem dadurch, dass die Klemmmittel 3 an zwei Bereichen 13, 14 des Gewindes 2 über mehrere aufeinanderfolgende Windungen des Gewindes 2 angeordnet sind. Zwischen den beiden Bereichen 13, 14 sind mehrere Windungen des Gewindes 2 ohne solche Klemmmittel 3 vorgesehen.

Dabei ist der eine Bereich 13 etwa am hinteren Ende des Schaftes 17 des Verbindungselements 40 angeordnet, welches dem Kopf 16 zugewandt ist. Der andere Bereich 14 mit den Klemmmitteln 3 liegt, in axialer Richtung gesehen, etwa in der Mitte des Schafts 17 des Verbindungselements 40.

Das Verbindungselement 40 gemäß der Figuren 7 und 8 unterscheidet sich von dem Verbindungselement 20 der Figuren 3 und 4 und dem Verbindungselement 30 der Figuren 5 und 6 unter anderem dadurch, dass die klemmkrafterzeugenden Flanken 6 in Richtung zum freien Ende 12 des Schaftes 17 und die klemmkrafterzeugenden Flanken 9 in Richtung zum Kopf 16 des Verbindungselements 40 weisen.

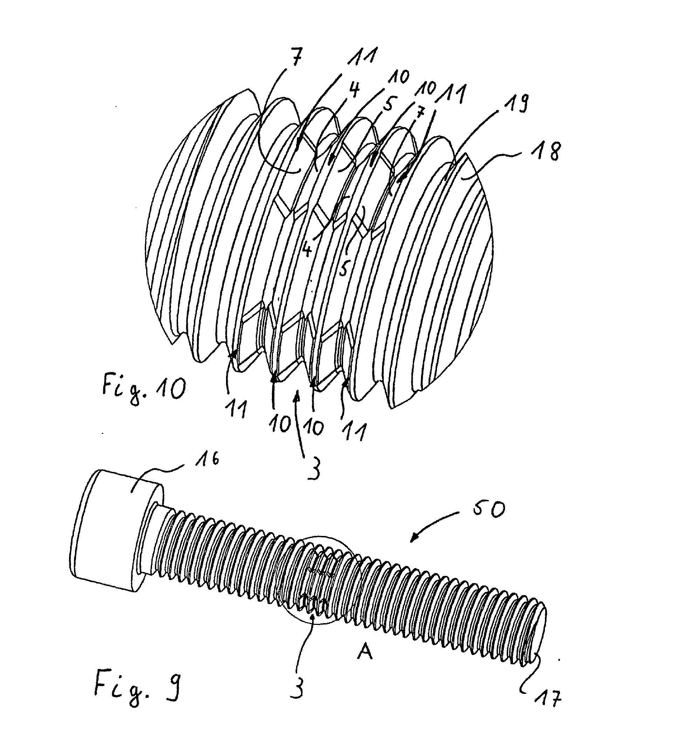

Die Figuren 9 und 10 zeigen ein Verbindungselement 50 in Art einer Schraube, bei dem die Klemmmittel 3 durch die Klemmabschnitte 10 und zusätzlich durch die Klemmabschnitte 11 gebildet sind. Die Klemmabschnitte 10 und die Klemmabschnitte 11 sind an vier aufeinanderfolgenden Windungen des Gewindes 2 vorgesehen. Dabei sind bevorzugt an den außenliegenden Windungen die Klemmabschnitte 11 gebildet, welche lediglich die eine klemmkrafterzeugende Flanke 7 aufweisen. Die dazwischen liegenden Windungen weisen die Klemmabschnitte 10 auf, bei denen die beiden Flanken 4, 5 als klemmkrafterzeugend ausgebildet sind.

Die Klemmabschnitte 10, 11 sind über die jeweilige Windung verteilt angeordnet. Die Klemmabschnitte 10 bzw. 11 benachbarter Windungen liegen in der Weise zueinander, dass die Klemmabschnitte 10 bzw. 11 in axialer Richtung des Verbindungselements 50 eine Reihe bilden, so dass je nach Anzahl der Klemmabschnitte 10 bzw. 11 pro Windung eine entsprechende Anzahl von Reihen vorliegt.

Bevorzugt ist die lediglich eine klemmkrafterzeugende Flanke 7 der Klemmabschnitte 11 an derjenigen Flanke der Windung gebildet, welche zu der sich anschließenden Windung mit den Klemmabschnitten 10 zugewandt ist.

### Bezugszeichenliste

- 1: Verbindungselement, Schraube
- 2: Gewinde
- 3: Klemmmittel
- 4: Flanke eines Klemmabschnitts
- 5: Flanke eines Klemmabschnitts
- 6: Flanke eines Klemmabschnitts
- 7: Flanke eines Klemmabschnitts
- 8: Flanke eines Klemmabschnitts
- 9: Flanke eines Klemmabschnitts
- 10: Klemmabschnitt
- 11: Klemmabschnitt
- 12: freies Ende
- 13, 14: Bereich
- 16: Kopf
- 17: Schaft
- 18: Flanke außerhalb des Klemmabschnitts
- 19: Flanke außerhalb des Klemmabschnitts
- 20: Verbindungselement, Schraube
- 30: Verbindungselement, Schraube
- 40: Verbindungselement, Schraube
- 50: Verbindungselement, Schraube

- 100: Gewindeprofil
- 110: Flanke, Gewindeflanke
- 120: Gewindespitze
- 130: Gewindegrund

## Patentansprüche

1. Verbindungselement (1) mit Gewinde (2), welches mit einem Gegengewinde, beispielsweise einer Mutter, in Eingriff bringbar ist, und mit Mitteln (3) zum Erzeugen einer auf das Gegengewinde wirkenden Klemmkraft, wobei die Klemmmittel (3) durch die Flanken (4, 5; 6, 7, 8, 9) wenigstens eines Abschnittes (10; 11) des Gewindes (2) gebildet sind, deren Anordnung zueinander gegenüber der Anordnung der Flanken (18, 19) des Gewindes (2) außerhalb des Klemmabschnittes (10; 11) derart geändert ist, dass bei Eingriff des Gewindes (2) in das Gegengewinde die Klemmkraft an wenigstens einer der Flanken (4, 5; 6, 7, 8, 9) des Klemmabschnittes (10; 11) erzeugt wird, **dadurch gekennzeichnet, dass** zwischen den Windungen mit Klemmmitteln (3) wenigstens eine Windung ohne Klemmmittel liegt.

2. Verbindungselement nach Anspruch 1, **dadurch gekennzeichnet, dass** die Flanken (4, 5; 6, 7, 8, 9) des wenigstens einen Klemmabschnittes (10; 11) derart zueinander angeordnet sind, dass im eingegriffenen Zustand von Gewinde (2) und Gegengewinde das Verbindungselement (1) in dem Gegengewinde verdrehsicher gehalten ist.

3. Verbindungselement nach Anspruch 1 oder 2, **dadurch gekennzeichnet, dass** eine der Flanken (6, 7, 8, 9) des wenigstens einen Klemmabschnitts (11) in ihrer Anordnung zur anderen Flanke (7, 8) des Klemmabschnittes (11) geändert ist.

4. Verbindungselement nach Anspruch 1 oder 2, **dadurch gekennzeichnet, dass** beide Flanken (4, 5) des Klemmabschnittes (10) in ihrer Anordnung zueinander geändert sind.

5. Verbindungselement nach einem der vorhergehenden Ansprüche, **dadurch gekennzeichnet, dass** die wenigstens eine Klemmkraft erzeugende Flanke (4, 5; 6, 9) des Klemmabschnittes (10; 11) nach außen versetzt ist.

6. Verbindungselement nach einem der vorhergehenden Ansprüche, **dadurch gekennzeichnet, dass** die wenigstens eine Klemmkraft erzeugende Flanke (4, 5; 6, 9) gegenüber der Flanke (18, 19) außerhalb des Klemmabschnittes (10; 11; 10, 11) im Wesentlichen parallel versetzt ist.

7. Verbindungselement nach einem der vorhergehenden Ansprüche, **dadurch gekennzeichnet, dass** sich der Klemmabschnitt über wenigstens eine Windung des Gewindes (2) erstreckt.

8. Verbindungselement nach einem der Ansprüche 1 bis 6, **dadurch gekennzeichnet, dass** eine Windung des Gewindes (2) mehrere Klemmabschnitte (10; 11) aufweist, welche bevorzugt über die Windung verteilt angeordnet sind.

9. Verbindungselement nach einem der vorhergehenden Ansprüche, **dadurch gekennzeichnet, dass** bei mehreren Klemmabschnitten (11) einer Windung des Gewindes (2) eine der Flanken (6, 7, 8, 9) des jeweiligen Klemmabschnittes (11) die Klemmkraft erzeugende Flanke (6, 9) bildet.

10. Verbindungselement nach Anspruch 9, **dadurch gekennzeichnet, dass** eine der beiden Flanken (6, 7, 8, 9) der jeweiligen Klemmabschnitte (11) abwechselnd die Klemmkraft erzeugende Flanke (6, 9) bildet.

11. Verbindungselement nach einem der vorhergehenden Ansprüchen, **dadurch gekennzeichnet, dass** wenigstens zwei aufeinanderfolgende Windungen des Gewindes (2) Klemmabschnitte (10; 11; 10, 11) aufweisen.

12. Verbindungselement nach Anspruch 11, **dadurch gekennzeichnet, dass** die einander zugewandten Flanken benachbarter Windungen die Klemmkraft erzeugenden Flanken (6, 9) der Klemmabschnitte (11) bilden.

13. Verbindungselement nach Anspruch 11 oder 12, **dadurch gekennzeichnet, dass** die Klemmkraft erzeugenden Flanken (6, 9) benachbarter Windungen versetzt zueinander angeordnet sind.

14. Schraubverbindung mit einem Verbindungselement (1) nach einem der vorhergehenden Ansprüche und einem ein Gegengewinde aufweisenden Bauteil, insbesondere Mutter oder plattenförmiges Teil, dessen Gegengewinde mit dem Gewinde (2) des Verbindungselements (1) in Eingriff gebracht ist.

## Claims

1. Connecting element (1) with a thread (2) which can brought into engagement with a mating thread, for example of a nut, and with means (3) for generating a clamping force acting on the mating thread, wherein the clamping means (3) are formed by the flanks (4, 5; 6, 7, 8, 9) of at least one section (10; 11) of the thread (2), the mutual arrangement of which relative to the arrangement of the flanks (18, 19) of the thread (2) is changed outside the clamping section (10; 11) in such a manner that on engagement of the thread (2) in the mating thread the clamping force is generated at at least one of the flanks (4, 5; 6, 7, 8, 9) of the clamping section (10; 11), **characterised in that** at least one turn without clamping means lies between the turns with clamping means (3).

2. Connecting element according to claim 1, **characterised in that** the flanks (4, 5; 6, 7, 8, 9) of the at least one clamping sections (10; 11) are so arranged relative to one another that in the engaged state of thread (2) and mating thread the connecting element (1) is held in the mating thread to be secure against rotation.

3. Connecting element according to claim 1 or 2, **characterised in that** one of the flanks (6, 7, 8, 9) of the at least one clamping section (11) is changed in its arrangement with respect to the other flank (7, 8) of the clamping section (11).

4. Connecting element according to claim 1 or 2, **characterised in that** the two flanks (4, 5) of the clamping section (10) are changed in their arrangement relative to one another.

5. Connecting element according to any one of the preceding claims, **characterised in that** the at least one flank (4, 5; 6, 7, 8, 9), which generates clamping force, of the clamping section (10; 11) is offset outwardly.

6. Connecting element according to any one of the preceding claims, **characterised in that** the at least one flank (4, 5; 6, 9), which generates clamping force, is substantially parallel and offset relative to the flank (18, 19) outside the clamping section (10; 11; 10, 11).

7. Connecting element according to any one of the preceding claims, **characterised in that** the clamping section extends over at least one turn of the thread (2).

8. Connecting element according to any one of claims 1 to 6, **characterised in that** a turn of the thread (2) has a plurality of clamping sections (10; 11) preferably arranged to be distributed over the turn.

9. Connecting element according to any one of the preceding claims, **characterised in that** in the case of a plurality of clamping sections (11) of a turn of the thread (2) one of the flanks (6, 7, 8, 9) of the respective clamping section (11) forms the flank (6, 9) generating clamping force.

10. Connecting element according to claim 9, **characterised in that** one of the two flanks (6, 7, 8, 9) of the respecting clamping sections (11) forms in alternation the flank (6, 9) generating clamping force.

11. Connecting element according to any one of the preceding claims, **characterised in that** at least two successive turns of the thread (2) have clamping sections (10; 11; 10, 11).

12. Connecting element according to claim 1, **characterised in that** the mutually facing flanks of adjacent turns form the flanks (6, 9) of the clamping section (11) generating clamping force.

13. Connecting element according to claim 11 or 12, **characterised in that** the flanks (6, 9) of adjacent turns generating clamping force are arranged to be offset relative to one another.

14. Screw connection with a connecting element (1) according to any one of the preceding claims and a component having a mating thread, particularly a nut or plate-shaped part, the mating thread of which is brought into engagement with the thread (2) of the connecting element (1).

## Revendications

1. Élément de raccordement (1) comprenant un filetage (2) qui peut être amené en engagement avec un contre-filetage, par exemple d'un écrou, et comprenant des moyens (3) pour générer une force de serrage agissant sur le contre-filetage, les moyens de serrage (3) étant formés par les flancs (4, 5 ; 6, 7, 8, 9) d'au moins une section (10 ; 11) du filetage (2), dont la disposition les uns par rapport aux autres peut être modifiée par rapport à la disposition des flancs (18, 19) du filetage (2) en dehors de la section de serrage (10 ; 11) de telle sorte que, lors de l'engagement du filetage (2) dans le contre-filetage, la force de serrage soit générée sur au moins l'un des flancs (4, 5 ; 6, 7, 8, 9) de la section de serrage (10 ; 11), **caractérisé en ce qu'**au moins une spire dépourvue de moyen serrage se situe entre les spires dotées de moyens de serrage (3).

2. Élément de raccordement selon la revendication 1, **caractérisé en ce que** les flancs (4, 5 ; 6, 7, 8, 9) de l'au moins une section de serrage (10 ; 11) sont disposés les uns par rapport aux autres de telle sorte que, dans l'état engagé du filetage ( 2 ) et du contre-filetage, l'élément de raccordement (1) soit maintenu de manière bloquée en rotation dans le contre-filetage.

3. Élément de raccordement selon la revendication 1 ou 2, **caractérisé en ce que** la disposition de l'un des flancs (6, 7, 8, 9) de l'au moins une section de serrage (11) par rapport à l'autre flanc (7, 8) de la section de serrage (11) est modifiée.

4. Élément de raccordement selon la revendication 1 ou 2, **caractérisé en ce que** la disposition l'un par rapport à l'autre des deux flancs (4, 5) de la section de serrage (10) est modifiée.

5. Élément de raccordement selon l'une quelconque des revendications précédentes, **caractérisé en ce que** l'au moins un flanc (4, 5 ; 6, 9) générant une force de serrage de la section de serrage (10 ; 11) est décalé vers l'extérieur.

6. Élément de raccordement selon l'une quelconque des revendications précédentes, **caractérisé en ce que** l'au moins un flanc (4, 5 ; 6, 9) générant une force de serrage est décalé essentiellement parallèlement par rapport au flanc (18, 19) en dehors de la section de serrage (10 ; 11 ; 10, 11).

7. Élément de raccordement selon l'une quelconque des revendications précédentes, **caractérisé en ce que** la section de serrage s'étend sur au moins une spire du filetage (2).

8. Élément de raccordement selon l'une quelconque des revendications 1 à 6, **caractérisé en ce qu'**une spire du filetage (2) comprend plusieurs sections de serrage (10 ; 11) qui sont de préférence disposées de manière répartie sur la spire.

9. Élément de raccordement selon l'une quelconque des revendications précédentes, **caractérisé en ce que** lorsqu'une spire du filetage (2) présente plusieurs sections de serrage (11), l'un des flancs (6, 7, 8, 9) de la section de serrage (11) respective forme le flanc (6, 9) générant une force de serrage.

10. Élément de raccordement selon la revendication 9, **caractérisé en ce que** l'un des deux flancs (6, 7, 8, 9) des sections de serrage (11) respectives forme en alternance le flanc (6, 9) générant une force de serrage.

11. Élément de raccordement selon l'une quelconque des revendications précédentes, **caractérisé en ce qu'**au moins deux spires consécutives du filetage (2) comprennent des sections de serrage (10 ; 11 ; 10, 11).

12. Élément de raccordement selon la revendication 11, **caractérisé en ce que** les flancs se faisant face de spires adjacentes forment les flancs (6, 9) générant une force de serrage des sections de serrage (11).

13. Élément de raccordement selon la revendication 11 ou 12, **caractérisé en ce que** les flancs (6, 9) générant une force de serrage de spires adjacentes sont disposés de manière décalée les uns par rapport aux autres.

14. Raccordement vissé doté d'un élément de raccordement (1) selon l'une quelconque des revendications précédentes et doté d'une pièce structurale comprenant un contre-filetage, en particulier un écrou ou une pièce en forme de plaque dont le contre-filetage est amené en engagement avec le filetage (2) de l'élément de raccordement (1).
